# EUROPEAN PATENT SPECIFICATION

(11) **EP 0 434 644 B1**
(45) Date of publication and mention of the grant of the patent: **02.05.1997**
(21) Application number: 90830603.8
(22) Date of filing: 20.12.1990
(51) Int. Cl.: G01N 21/64

(54) **Instrument for the two-channel measurement of the fluorescence of chlorophyll**
Vorrichtung zur Zwei-Kanälenmessung der Fluoreszenz von Chlorophyl
Instrument pour la mesure sur deux canaux de la fluorescence de la chlorophylle

(30) Priority: 22.12.1989 IT 959189
(43) Date of publication of application: 26.06.1991
(73) Proprietor: CONSIGLIO NAZIONALE DELLE RICERCHE, I-00195 Roma (IT)
(72) Inventor: Mazzinghi, Piero, Dr., I-50030 Vaglia, Firenze (IT)
(74) Representative: Mannucci, Gianfranco, Dott.-Ing.

(56) References cited:
- EP-A- 0 215 399
- WO-A-87/06698
- DE-A- 3 303 510
- APPLIED SPECTROSCOPY. vol. 38, no. 1, January 1984, BALTIMORE US pages 38 - 42; B.J.TROMBERG ET AL.: 'optical fiber fluoroprobes for biological measurements'
- PROCEEDINGS OF IGARSS' 86 SYMPOSIUM September 1986, ZURICH pages 1571 - 1579; H.K. LICHTENTHALER: "laser-induced chlorophyll fluorescence of living plants"
- APPLIED OPTICS. vol. 28, no. 3, February 1989, NEW YORK US pages 595 - 600; J. COWLES ET AL.: 'in situ monitoring of ocean chlorophyll'

## Description

The present invention relates to a portable instrument which is capable of measuring the emission of fluorescence of green leaves on both the principal peaks of emission of chlorophyll a (690 and 730 nm). The instrument can in brief be called LEAF (Laser Excited Automatic Fluorometer).

The study of the fluorescence of chlorophyll a on leaves "in vivo" has proved to be a potent instrument of research on the functioning of the photosynthetic apparatus and of photosynthesis and, consequently, of the state of health of the vegetable organism.

When a photon is absorbed by a centre of photosynthetic reaction, it has only three methods of de-excitation, namely the phenomena: of a reaction of photosynthesis, of dissipation as heat, and of re-emission as fluorescence. If an external cause or a state of stress blocks the mechanism of transport of the electrons which forms the basis of photosynthesis, without the absorption of external light being modified, the last two phenomena increase at the expense of the photosynthesis. Measurement of the fluorescence is, therefore, the quickest, most direct and non-invasive method for the measurement of photosynthetic activity.

Measurements of fluorescence of chlorophyll, on leaves in vivo, which have come into experimental practice, are fundamentally of two types:
1) Measurements of form of the spectrum, in the stationary state, and in particular of the intensity ratio on the two principal peaks of fluorescence (F690/F730). Normally, a high value of this ratio signifies a low photosynthesis rate, whereas a value close to 1 is indicative of good photosynthetic activity.
2) Measurements of kinetics, the typical example of which are the measurements of Kautsky effect, that is to say of the response of a leaf, which is adapted to the darkness, to an abrupt increase in light, of intensity sufficient to activate photosynthesis (approximately 100 W/m²). A significant indication of the state of health of vegetation, which is obtained by means of these measurements, is the Rfd value (ratio of fluorescence decrease), that is to say the ratio between the maximum value of fluorescence and the stationary value at saturation. In this case, a value close to 1 indicates a bad state of health, whereas higher values indicate a gradually more efficient photosynthesis. The temporal resolution required is of the order of ms for the measurement of the initial rapidly increasing part and of approximately 1 s for the measurement of the successive decrease to the stationary state.

Both these measurements have now become routine techniques for the study of photosynthetic activity in the laboratory and on experimental cultivars.

In general, the measurement of F690/F730 is preferable as it is quicker and more direct. That of Rfd has been more greatly tested at the survey level as it has been known much longer. It is, therefore, extremely useful to have available a single instrument which is capable of carrying out both measurements.

The possibility, with regard to the use of these techniques of diagnostics for vegetation in actual agricultural practice, is currently hindered by the requirement to have available a compact instrument which is easy to use and relatively inexpensive in order to carry out the measurements directly in the field.

Instruments available on the market until now satisfy this requirement partially, as either they are derived directly from laboratory instrumentation and are, therefore, relatively bulky and have a 220 V supply, or they have relatively restricted performance in terms of the types of measurements which can be carried out, as they can measure only the Rfd value at wavelengths greater than 730 nm.

WO-A-87 06 698 discloses a portable instrument for the measurement of the fluorescence of chlorophyll with a measurement probe to be brought into contact with the vegetable tissue. An optical fiber transmits the excitation light to the plant and a second optical fiber transmits the fluorescence light back to a probe. The light source is a common lamp, and for the transmission and the return of the signals it is necessary to have two big and heavy optical fibers. The power installed must be considerable.

The publication Applied Spectroscopy Vol.38, n°1, 1984, pages 38-42, B. J. Tromberg et al.: "Optical Fiber Fluoroprobes for biological measurements" provides an instrument which uses a single fiber to guide the excitation radiation produced by a laser into the sample and guide the fluorescence emission to a photomultiplier tube. The instrument provides to have a narrow optical fiber enter in a hollow needle, and it is apt for measurements on a fluid.

The instrument, which forms the subject of the invention and is described below, however, is capable of carrying out both types of measurements (F690/F730 and Rfd at both wavelengths). It is considerably more compact and lighter than commercially available devices. It can moreover be completely self-sufficient, as regards electric supply, for an entire working day.

According to the invention, the portable instrument comprises, for the excitation of photosynthesis and fluorescence: a laser source; one single optical fibre which transports the laser energy for the excitation of the photosynthesis and of the fluorescence and the return signals; a selective system in the form of a dichroic mirror which separates the return signals from the excitation energy; and a system for partial separation of the return signals into at least two beams, which are received by the same number of fluorescence detectors within different spectral bands.

The two flourescence detectors may be activated for two different spectral bands of 690±5 nm and 730±5 nm, respectively.

The end of the single optical fibre can be associated with a microprism for deflection towards and from the surface of the vegetable tissue to be examined. The probe can be constructed in the form of pincers which are stressed elastically in closing, with a soft facing for pressing the leaf against a transparent lamina and a sunlight filter, which does not transmit in the chlorophyll emission band and is highly transparent to the wavelengths of absorption.

The most salient characteristic of the instrument is provided by the use of a laser source for the excitation of the fluorescence, instead of an incoherent source (light-emitting diodes or lamps) such as is used by commercial instruments. The advantage of this solution is provided by the possibility of obtaining the optimum power density for these measurements (approximately 100 W/m²) with a very reduced total installed power, of the order of 0.2 mW, by illuminating a very small area by virtue of the collimation properties of the laser beam. These properties moreover make it possible to use an optical fibre of small diameter (in the prototype 600 µm) to transport the beam of laser energy from the instrument to the measurement probe. By means of a suitable optical system, described below in more detail, the same optical fibre can also be used to collect the fluorescence. The coupling of the measurement probe by means of an optical fibre makes it possible to carry out rapid samplings, even in the field, keeping the instrument on a shoulder-strap.

The adoption of a single optical fibre of small diameter, which is, therefore, extemely flexible, in particular facilitates the use of the instrument in relation to devices currently in use, which usually use three bundles of fibres, each of a diameter of 1 cm, which are used to transport separately the excitation radiation and the fluorescence signal at the two wavelengths.

The monochromaticity of the laser radiation moreover even enables the peak at 690 nm be measured, as there is no superposition between the excitation signal and that of fluorescence, as occurs with excitation by means of incoherent sources, even with a relatively narrow band as in the case of the use of light-emitting diodes (LEDs).

The invention will be better understood by following the description and the attached drawing, which shows a non-limitative exemplary embodiment of the invention itself.

In the drawing,
Fig. 1 shows a general diagram,
Fig. 2 shows partial view of the optical module,
Figs 3 and 4 show the measurement probe.

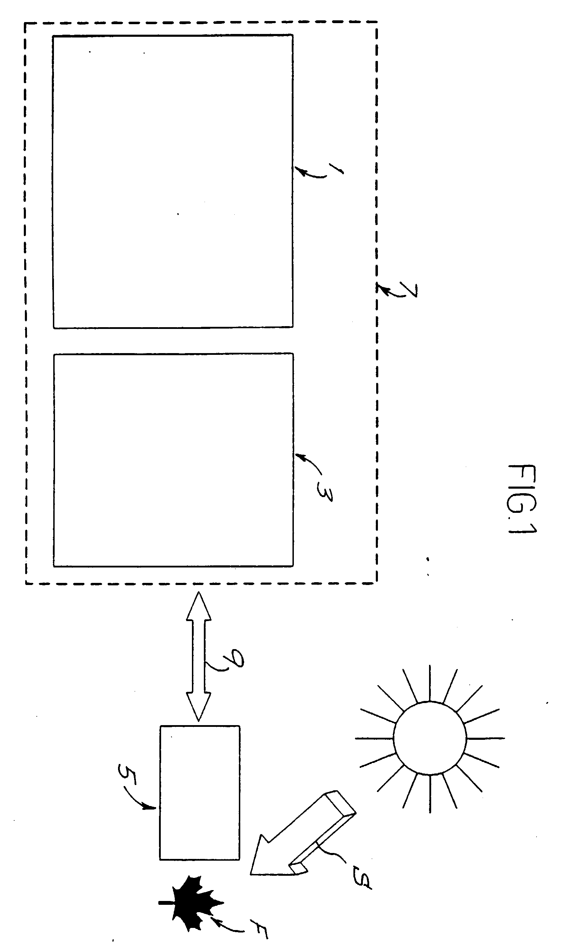

As can be seen from the drawing, the system is constituted (see Fig. 1) by three principal subassemblies: an electronic module 1, an optical module 3 and a measurement probe 5 respectively. The main body 7 of the instrument contains the modules 1 and 3, and an optical fibre 9 connects the optical module 3 to the probe 5 which is to be brought into contact with the leaf F irradiated by the sunlight S.

The electronic module 1 contains all the parts for the electric supply, including the rechargeable battery, and for processing the signal, namely, battery, feeders, user interface, memory and amplifiers.

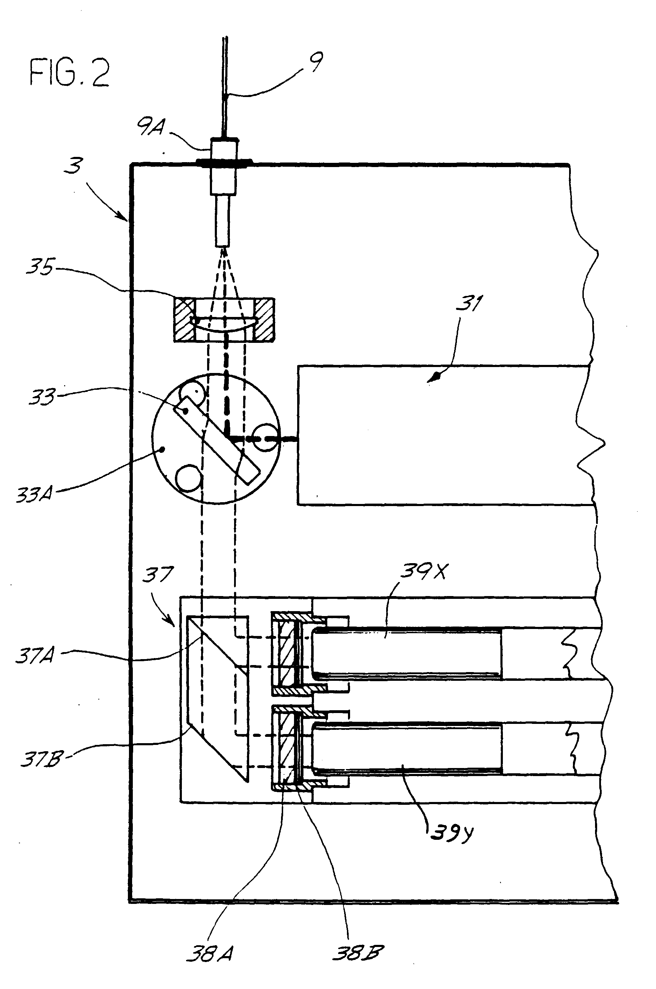

The optical module 3, which constitutes the most innovative part of the instrument, comprises (see Fig. 2) an excitation laser, a coupler and the detectors.

The laser 31, which can be used, can be a He-Ne laser with a power of 0.5 mW at 633 nm. 33 indicates a dichroic mirror which is capable of reflecting the wavelength of the laser 31, whereas it is completely transparent to the wavelengths of fluorescence of chlorophyll; a mirror with dielectric layers can be used, but it is also possible to use other technologies such as reticles, holographic couplers or other. 33A indicates a support of the dichroic mirror 33; this makes it possible to carry out fine movements of the mirror 33 in order to direct the output of the laser onto the lens 35 for coupling to the optical fibre 9. The lens 35 is the lens for focusing on the optical fibre 9; this lens has the dual purpose of focusing the laser beam on the optical fibre 9 and of collimating the fluorescence returning from the same onto the detectors. 37 indicates a system of separation of the beams of return rays; this system spatially separates the beams to be sent to the two or more fluorescence detectors. It can be constituted by a partially (50%) reflecting mirror 37A and by a totally reflecting mirror 37B, and in practice can be a total reflection prism. The system can advantageously be replaced by a second dichroic mirror (or other) which separates the different wavelengths. Wide-band 38A and narrow-band 38B optical filters, which are combined with photo-multipliers 39X and 39Y, follow the two mirrors. Said filters 38A, 38B select the spectral band of the signal sent to the detectors. For chlorophyll, the optimum bands are 690 ± 5 nm and 730 ± 5 nm approximately. Each filter can be constituted by an assembly composed of an interferential filter with the characteristics mentioned above and by a wide-band absorption filter in order to improve the extra-band rejection.

The instrument also comprises the detectors which convert the filtered light signal into an electrical signal which is sent to the electronic module. These detectors can be constituted by vacuum photo-multipliers.

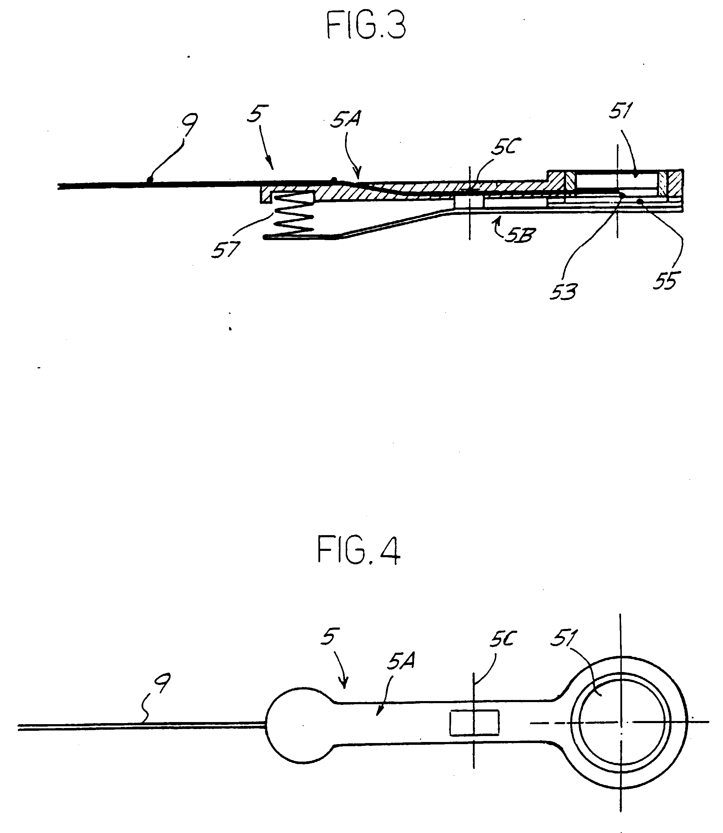

The output of the optical module 3 is constituted by the optical fibre 9 made of quartz, coupled by means of a suitable screw connector 9A. This allows easy removal of the fibre, which facilitates transport and replacement of the probe 5. The other end of the optical fibre 9 is connected to the measurement probe 5. The probe 5 (see Fig. 3) comprises two parts 5A, 5B, hinged at 5C, with a closing spring. The upper part 5A contains:
- an optical system for filtering the sunlight reflected by the leaf, constituted by a filter 51 with dielectric layers, which reflects the solar radiation in the band of emission of chlorophyll, whereas it has high transparency to the wavelength in which the latter absorbs;
- a system for coupling the optical fibre 9 to the leaf, constituted by a total reflection microprism 53, approximately 1 mm wide, which prism 53 serves both for the coupling of the excitation laser beam and for the collection of the fluorescence signal;
- a system for protecting the abovementioned optical components, constituted by a thin sheet of glass 55, which forms a watertight chamber; this means a slight weakening of the signal detected but considerably increases the reliability of the probe during use in the field, in an environment with the likely presence of dust and of humidity.

The lower part 5B of the probe, once the same has been closed by the pressure of the spring 57, holds the leaf in position during measurement, guaranteeing the geometrical reproducibility of the measurements. The parts in contact with the leaf are constituted by expanded neoprene, which is extremely soft, so as to avoid any possible damage to the leaf being examined.

An instrument according to the invention can be Droduced with the following characteristics:

| | |
|---|---|
| Excitation laser | He-Ne, 633 nm |
| Laser power | 0.3 mW at the leaf |
| Power density | 100 W/m² at the leaf |
| Measurement channel 1 | 690±5 nm |
| Measurement channel 2 | 730±5 nm |
| Calibration ratio | traceable NBS |
| Measurement system | optical fibre probe |
| Output coupler | integrated micro-optics |
| Display | 2, digital, liquid crystal |
| Memory | analog, sampling |
| Supply | internal rechargeable battery |
| Autonomy | 8 hours or 1000 measurements |
| Dimensions | 37x29x11 cm |
| Weight, including battery | 5.6 kg |

The use of the instrument, the characteristics of which are summarised above, is very simple as it is sufficient to insert the leaf into the measuring pincers and press the measurement button. Once the measurement cycle is finished (approximately 3 seconds), the intensity of the fluorescence on the two channels is displayed by two liquid-crystal displays.

The optical-fibre 9 probe makes it possible to carry out rapid samplings, even in the field, keeping the instrument on a shoulder-strap. The measurement probe described above makes it possible to work in full sunlight, without disturbing the photosynthetic state of the plant. The low power of the laser used for the excitation of the fluorescence and the construction of the measuring pincers avoid any damage to the leaf being examined. The measurement can, therefore, be repeated a number of times on the same leaf, so as to verify precisely the effect of ambient changes and of any treatments carried out on the plant.

If the measurement is carried out in conditions of high luminosity (leaf in full sunlight), it is possible to check the intensity of the residual background light, due to the direct reflection of the leaf, which has not been completely eliminated by the filter on the probe, and subtract it if necessary.

With an instrument as characterised above, the various operations have to be carried out manually by the user.

With an improved and sophisticated instrument, a microprocessor, installed inside the instrument, can be provided, which serves to carry out the various operations automatically, and to store the results of the measurements for subsequent transfer to computer for storage and processing.

The microprocessor can also make it possible to carry out kinetics measurements autonomously, which are otherwise only possible using a chart recorder or an oscillograph in order to store the pattern of the signal.

In relation to the manual instrument defined first, a computerised instrument can have the following modified characteristics with regard to those of the first instrument:
- data acquisition system with built-in microprocessor
- 2 12-bit analog-digital converters
- RAM of 32 kb, sufficient for 8000 pieces of data and 10 measurement setups
- buffer battery for RAM, independent of power supply, life 4 years
- alphanumeric liquid-crystal display, 80 characters
- direct display of the fluorescence ratio and/or of the total intensity
- built-in autodiagnosis system
- auto-shutoff system, to maximise the life of the battery
- automatic reinitialisation of the last setup, upon startup
- numeric keyboard with function keys, 16 keys
- selection of functioning modes from interactive menu
- functioning modes: normal, auto-repeat, continuous
- definition of the measurement parameters by the user
- temporal resolution in continuous mode 1 ms
- RS 232 serial interface for data transfer to an external computer.

In this configuration, the instrument can, therefore, carry out automatically and simultaneously both types of measurement which have proved in practice to be of more direct interpretation: the F690/F730 fluorescence ratio and the measurement of kinetics Rfd.

It is clear that, in the presence of vegetable structures which are not laminar like leaves, but thick or formed on surfaces, such as lichens, the terminal is formed directly from the end of the optical fibre, which is positioned against the vegetable surface to be examined.

In any case, the presence of the single optical fibre ensures easy replaceability and rapid disassembly.

## Claims

1. Portable instrument for the measurement of the fluorescence of chlorophyll with a measurement probe to be brought into contact with the vegetable tissue, characterised in that it comprises, for the excitation of photosynthesis and fluorescence: a laser source (31); one single optical fibre (9) which transports the laser energy for the excitation of the photosynthesis and of the fluorescence and the return signals; a selective system in the form of a dichroic mirror (33) which separates the return signals from the excitation energy; and a system (37) for partial separation of the return signals into at least two beams, which are received by the same number of fluorescence detectors (39X, 39Y) within different spectral bands.

2. Instrument according to claim 1, characterised in that the two flourescence detectors (39X, 39Y) are activated for two different spectral bands of 690±5 nm and 730±5 nm, respectively.

3. Instrument according to the preceding claims, characterised in that the single optical fibre (9) has, at its end which is received in the probe (5), a microprism (53) for deflection towards and from the surface of the vegetable tissue to be examined.

4. Instrument according to at least Claim 3, characterised in that the probe (5) is constructed in two parts in the form of pincers (5A, 5B) which are stressed elastically in closing, with a soft facing for pressing the leaves against a transparent lamina (55), arranged in the region of the microprism (53) and a sunlight filter (51) which does not transmit in the chlorophyll emission band and is highly transparent to the wavelengths of absorption.

## Patentansprüche

1. Tragbares Gerät zur Messung der Fluoreszenz von Chlorophyll mit einer mit dem pflanzlichen Gewebe in Kontakt zu bringenden Meßsonde, dadurch **gekennzeichnet**, daß es für die Erregung von Fotosynthese und Fluoreszenz aufweist: eine Laserquelle (31); eine optische Einzelfaser (9), die die Laserenergie für die Erregung der Fotosynthese und der Fluoreszenz sowie die Rücklaufsignale überträgt; ein Selektionssystem in Form eines dichroitischen Spiegels (33), das die Rücklaufsignale von der Erregungsenergie trennt; und ein System (37) zur teilweisen Auftrennung der Rücklaufsignale in mindestens zwei Strahlen, die von der gleichen Anzahl von Fluoreszenzdetektoren (39X, 39Y) innerhalb unterschiedlicher Spektralbänder empfangen werden.

2. Gerät nach Anspruch 1, dadurch **gekennzeichnet**, daß die beiden Fluoreszenzdetektoren (39X, 39Y) für zwei verschiedene Spektralbänder von 690±5 nm bzw. 730±5 nm aktiviert sind.

3. Gerät nach den vorangehenden Ansprüchen, dadurch **gekennzeichnet**, daß die optische Einzelfaser (9) an ihrem in der Sonde (5) aufgenommenen Ende ein Mikroprisma (53) für die Anlenkung zu und von der Oberfläche des zu prüfenden pflanzlichen Gewebes aufweist.

4. Gerät nach mindestens Anspruch 3, dadurch **gekennzeichnet**, daß die Sonde (5) zweiteilig in Form einer Pinzette (5A, 5B) konstruiert ist, deren Schenkel beim Schließen elastisch gespannt werden, mit einem weichen Belag zum Andrücken der Blätter gegen ein transparentes Plättchen (55), das im Bereich des Mikroprismas (53) angeordnet, und einem Sonnenlichtfilter (51), das im Chlorophyllemissionsband nicht durchlässig ist und für die Absorptionswellenlängen in hohem Maße durchlässig ist.

## Revendications

1. Instrument portable pour la mesure de la fluorescence de la chlorophylle avec une sonde de mesure à mettre en contact avec le tissu végétal, caractérisé en ce qu'il comprend pour l'excitation de la photosynthèse et la fluorescence : une source laser (31) ; une fibre optique unique (9) qui transporte l'énergie laser pour l'excitation de la photosynthèse et de la fluorescence et des signaux en retour ; un système sélectif sous forme de miroir dichroïque (33) qui sépare les signaux de retour de l'énergie d'excitation ; et un système (37) pour la séparation partielle des signaux de retour en au moins deux faisceaux qui sont reçus par le même nombre de détecteurs de fluorescence (39X, 39Y) avec des bandes spectrales différentes.

2. Instrument selon la revendication 1, caractérisé en ce que les deux détecteurs de fluorescence (39X, 39Y) sont activés pour deux bandes spectrales différentes respectivement de 690±5 nm et 730±5 nm.

3. Instrument selon les revendications précédentes, caractérisé en ce que la fibre optique unique (9) possède, sur son extrémité qui est logée dans la sonde (5), un microprisme (53) pour la déflection en direction et en provenance de la surface du tissu végétal à examiner.

4. Instrument selon au moins la revendication 3, caractérisé en ce que la sonde (5) est construite en deux parties sous forme de pinces (5A, 5B) qui sont contraintes élastiquement à la fermeture avec une surface de contact douce pour compresser les feuilles contre une lamelle transparente (55) disposée dans la région du microprisme (53) et un filtre de lumière solaire (51) qui ne transmet pas dans la bande d'émission de la chlorophylle et qui est fortement transparent aux longueurs d'onde d'absorption.
